# FASCICULE DE BREVET EUROPEEN

(11) **EP 2 048 376 B1**
(45) Date de publication et mention de la délivrance du brevet: **16.05.2012**
(21) Numéro de dépôt: 08305609.3
(22) Date de dépôt: 29.09.2008
(51) Int. Cl.: F16B 2/24, F16B 5/06

(54) **Ensemble de fixation**
Befestigungsanordnung
Securing assembly

(30) Priorité: 09.10.2007 FR 0758165
(43) Date de publication de la demande: 15.04.2009
(73) Titulaire: Renault s.a.s., 92100 Boulogne Billancourt (FR)
(72) Inventeur: Cochard, Xavier, 78340, Les Clayes sous Bois (FR)

(56) Documents cités:
- EP-A- 0 933 537
- GB-A- 2 187 499

## Description

La présente invention concerne un ensemble de fixation comportant une agrafe de fixation montée sur un élément support, dans lequel l'agrafe est formée d'une première lame apte à s'étendre contre une première face de l'élément support, une extrémité de cette première lame étant prolongée sensiblement perpendiculairement par une partie intermédiaire dont l'extrémité libre est prolongée par une deuxième lame, cette deuxième lame étant formée successivement depuis la partie intermédiaire d'une première zoné inclinée orientée vers la première lame, d'une deuxième zone bombée en saillie vers la première lame, d'une troisième zone inclinée prolongeant la deuxième zone bombée et s'éloignant de la première zone et de la première lame, cette deuxième lame étant apte à prendre au moins un appui contre une deuxième face de l'élément support, opposée à la première face, de sorte que l'élément support est serré par les deux lames de l'agrafe (cf. par exemple le document GB 2 187 499 A)

Sur des ensembles connus, et à titre d'exemple sur l'ensemble de fixation représenté à la figure 1, ou sur l'ensemble de fixation du document EP 0 933 537, A2 la forme de la deuxième lame impose un effort important au niveau de la deuxième zone bombée, point de flexion de la lame. En cas d'effort plus important que ceux pris en charge par la dimension et les matériaux de l'agrafe, cette agrafe entre dans sa zone de déformation plastique, de sorte qu'elle n'est plus efficace par la suite pour encaisser les efforts souhaités.

De même, dans ledit GB 2 187 499 A, l'élément de support présente une cavité en regard de la troisième zone inclinée de la lame ce qui ne permet pas d'éviter la déformation plastique.

Un des objectifs de l'invention est de proposer un ensemble de fixation apte à encaisser les efforts dégagés par l'élément à fixer, tout en restant dans une zone de déformation élastique.

En outre, en réponse à des objectifs que l'on retrouve invariablement chez les différents constructeurs automobiles, la présente invention se veut également peu coûteuse et peu encombrante.

Pour répondre à ces objectifs, l'invention propose un ensemble de fixation tel que décrit ci-dessus, caractérisé en ce que la deuxième face de l'élément support comporte une surface inclinée qui s'étend en regard d'au moins une partie de la troisième zone inclinée, et sur laquelle vient prendre appui cette troisième zone inclinée de la deuxième lame.

Selon différentes caractéristiques de la présente invention :
- l'angle et la dimension de la surface inclinée de l'élément support sont tels qu'un effort exercé sur la troisième zone inclinée implique un seul point de contact entre l'agrafe et l'élément support, au niveau de la surface inclinée et de la troisième zone inclinée ;
- l'angle et la dimension de la surface inclinée de l'élément support sont tels qu'un effort exercé sur la troisième zone inclinée implique deux points de contact entre l'agrafe et la deuxième face de l'élément support, un premier point de contact au niveau de la surface inclinée et de la troisième zone inclinée, et un deuxième point de contact au niveau de la deuxième zone bombée de la deuxième lame.

L'invention vise à protéger également un véhicule automobile, dans lequel la colonne de direction est recouverte d'une coquille de protection, et dans lequel au moins un ensemble de fixation tel que décrit ci-dessus est disposé entre la coquille et un élément support solidaire de la colonne de direction.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un ensemble de fixation selon l'état de la technique ;
- la figure 2 est une représentation schématique d'un ensemble de fixation selon l'invention ;
- la figure 3 est une vue d'un ensemble de direction d'un véhicule représenté sous la coquille de protection de la colonne de direction muni d'un ensemble de fixation tel que représenté à la figure 2 ;
- la figure 4 est une vue équivalente à la figure 3, représentée avec la coquille de protection.

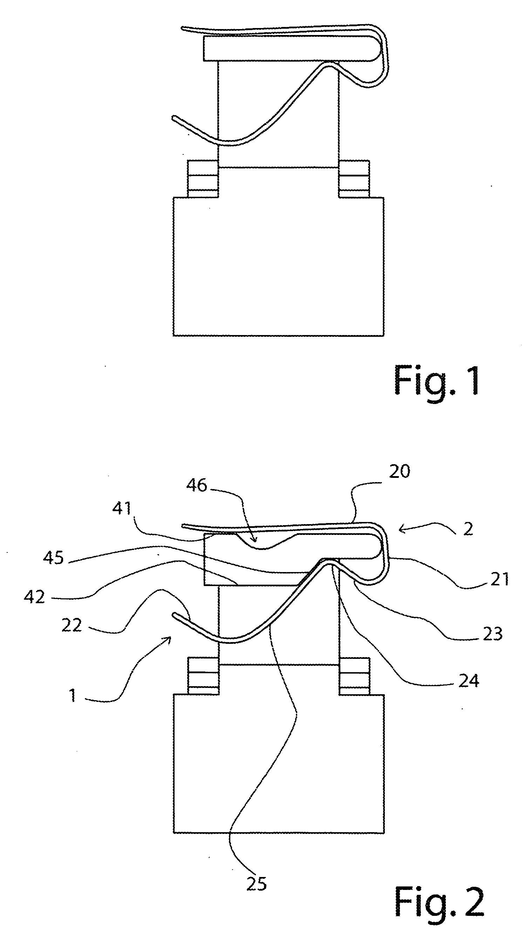

Tel que représenté sur la figure 2, un ensemble de fixation 1 est formé d'une agrafe 2 montée de sorte à serrer un élément support 4. A cet effet, l'agrafe 2 présente deux lames liées par une partie intermédiaire 21.

La première lame 20 est apte à venir au contact d'une première face 41 de l'élément support 4. Avantageusement, et tel que représenté sur la figure 2, cette première lame 20 est sensiblement plane pour être en contact de la surface plane formant la première face 41 de l'élément support 4 et présente à son extrémité libre un évasement pour faciliter la mise en place de l'agrafe 2.

La deuxième lame 22 de l'agrafe 2 a pour fonction de pincer l'élément support 4 par une action de compression vers la première lame 20. Ainsi, une pression sur la deuxième lame 22 génère un point d'appui entre cette deuxième lame 22 et l'élément support 4 et génère ainsi un effort sur la deuxième face 42 de l'élément vers la première lame 20.

Cette deuxième lame 22 présente depuis la partie intermédiaire 21 une première zone inclinée 23, orientée vers la première lame 20 et dont l'extrémité forme une deuxième zone proche de la première lame 20. Au repos, les dimensions de ces différentes zones sont telles que la distance minimale entre la première lame 20 et la deuxième zone est sensiblement équivalente à l'épaisseur de l'élément support 4. Cette deuxième zone est prolongée à l'opposée de la première zone par une troisième zone inclinée 25, qui s'éloigne d'une part de la première zone inclinée 23 et d'autre part de la première lame 20 de l'agrafe 2, de sorte que telle que représentée, la deuxième zone est bombée et en saillie, orientée vers la première lame 20.

C'est classiquement cette troisième zone inclinée 25 qui subit la pression générant par la suite l'effort de la deuxième lame 22 sur l'élément support 4. Cette pression pourra être effectuée au milieu de la troisième zone inclinée 25, ou à son extrémité libre, courbée éventuellement dans ce cas.

Dans l'ensemble de fixation 1 selon l'invention, et tel que représenté figures 2 à 4, cette troisième zone inclinée 25 s'étend en regard d'une surface inclinée 45 formée dans l'élément support 4.

Selon la forme initiale de l'élément support 4, et la forme de l'extrémité de la troisième zone, cette surface inclinée 45 peut s'étendre sur tout ou partie de la troisième zone inclinée 25. Au moins une partie de cette troisième zone inclinée 25 doit être apte à prendre appui sur la surface inclinée 45 de l'élément support 4, lorsqu'une pression est exercée sur la deuxième lame 22.

Selon les dimensions de l'agrafe 2 et de l'élément support 4, cette pression peut générer ainsi un double appui de la deuxième lame 22 sur l'élément support 4, d'une part entre la troisième zone inclinée 25 de la deuxième lame 22 et la surface inclinée 45 de l'élément support 4, d'autre part entre la deuxième zone bombée 24 de la deuxième lame 22 et la deuxième face 42 de l'élément support 4.

Il sera compris que selon l'invention, et selon l'effort encaissé par la deuxième lame 22, seul un appui de la troisième zone inclinée 25 sur la surface inclinée 45 pourrait avoir lieu. Dans tous les cas selon l'invention, l'effort généré au niveau de la deuxième zone bombée est diminué voire rendu nul, et permet d'éviter d'entrer dans la zone de déformation plastique.

Tel que représenté à la figure 2, une encoche 46 est réalisée dans la première face 41 de l'élément support 4, de sorte à retenir l'agrafe de fixation 2 en position autour de l'élément support 4. Un élément non représenté en saillie de la première lame 20 de l'agrafe 2, et orientée vers l'intérieur de cette agrafe est alors apte à se planter dans l'encoche 46 pour assurer le maintien en position.

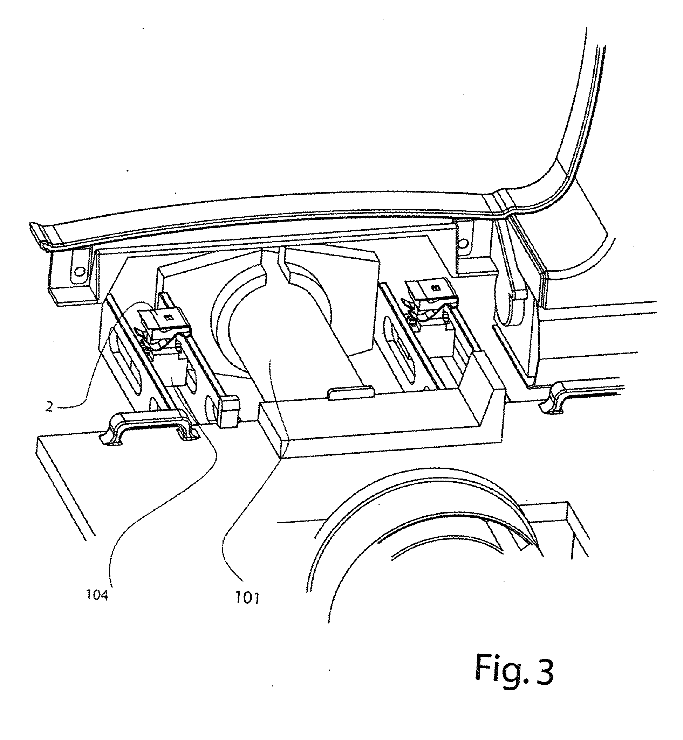

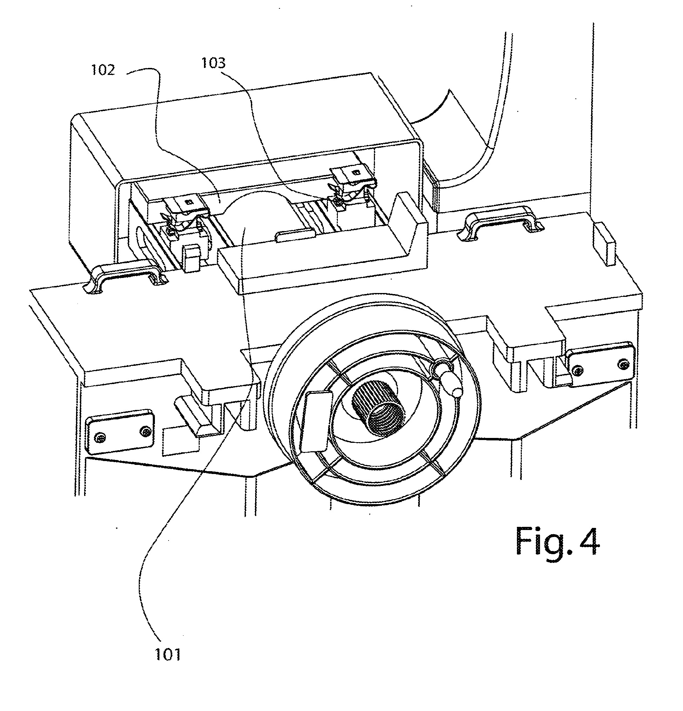

Le type d'ensemble de fixation 1 décrit ci-dessus peut être utilisé dans le domaine automobile, et notamment pour la fixation de la coquille de protection 102 autour de la colonne de direction 101 du véhicule, exemple d'utilisation représenté ici aux figures 3 et 4.

A cet effet, l'élément support 4 selon l'invention est formé par une allonge 104 solidaire de la colonne de direction 101. L'agrafe 2 selon l'invention est montée sur la partie supérieure de cette allonge 104, la première lame 20 étant disposée en appui sur la face supérieure de l'allonge 104 correspondant dans ce cas à la première face 41 de l'élément support 4.

L'agrafe 2 est clippée autour de l'allonge 104 et la troisième zone inclinée 25 de la deuxième lame 22 vient en regard d'une surface inclinée 45 formée sur l'allonge 104.

Les dimensions de l'agrafe 2 et de l'allonge 104 sont telles qu'un jeu sensiblement vertical est disposé entre l'extrémité verticale de la deuxième lame 22 et la base de l'allonge 104.

La coquille de protection 102 est alors enfoncée dans le panneau de bord autour de la colonne de direction 101. Cette coquille présente une patte de maintien 103, qui est apte à être glissée dans le jeu entre l'extrémité verticale de la deuxième lame 22 et la base de l'allonge 104. L'épaisseur de cette patte de maintien 103 est telle que la patte de maintien 103 compresse la deuxième lame 22 verticale, de sorte que le montage de la coquille de protection 102 autour de la colonne de direction 101 n'offre pas de jeu.

Selon l'invention, cette flexion de la lame entraîne un contact entre la deuxième lame 22 et la surface inclinée 45 formée sur l'allonge 104, de sorte que cette deuxième lame 22 de l'agrafe 2 ne subit pas d'effort trop conséquents, aptes à déformer plastiquement cette deuxième lame 22. Ainsi, plusieurs montages et démontages de la coquille de protection 102 n'auront pas d'impact sur l'élasticité de la lame de l'agrafe 2.

L'invention n'est nullement limitée au mode de réalisation décrit et illustré qui n'a été donné qu'à titre d'exemple. Ainsi, il sera compris que ce type d'ensemble de fixation 1, qui permet de ne pas déformer la lame de l'agrafe 2 en évitant de l'amener dans sa zone plastique, pourra être utilisé dans d'autres zones du véhicules, ou bien dans d'autres applications industrielles hors automobile.

## Revendications

1. Ensemble de fixation: (1), du type comportant une agrafe (2) de fixation montée sur un élément support (4), dans lequel l'agrafe (2) est formée d'une première lame (20) apte à s'étendre contré une première face (41) de l'élément support (4), une extrémité de cette première lame (20) étant prolongée sensiblement perpendiculairement par une partie intermédiaire (21) dont l'extrémité libre est prolongée par une deuxième lame (22), cette deuxième lame (22) étant formée successivement depuis la partie intermédiaire (21) d'une première zone inclinée (23) orientée vers la première lame (20), d'une deuxième zone bombée (24) en saillie vers la première lame (20), d'une troisième zone inclinée (25) prolongeant la deuxième zone bombée (24) et s'éloignant de la première zone et de la première lame (20),
cette deuxième lame (22) étant apte à prendre au moins un appui contre une deuxième face (42) de l'élément support (4), opposée à la première face (41), de sorte que l'élément support (4) est serrée par les deux lames (20, 22) de l'agrafe (2),
**caractérisé en ce que** la deuxième face (42) de l'élément, support (4) comporte une surface inclinée (45) qui s'étend en regard d'au moins une partie de la troisième zone inclinée (25), et sur laquelle vient prendre appui cette troisième zone inclinée (25) de la deuxième lame (22).

2. Ensemble de fixation (1) selon la revendication 1 **caractérisé en ce que** l'angle et la dimension de la surface inclinée (45) de l'élément support (4) sont tels qu'un effort exercé sur la troisième zone inclinée (25) implique un seul point de contact entre l'agrafe (2) et l'élément support (4), au niveau de la surface inclinée (45) et de la troisième zone inclinée (25).

3. Ensemble de fixation (1) selon la revendication 1 **caractérisé en ce que** l'angle et la dimension de la surface inclinée (45) de l'élément support (4) sont tels qu'un effort exercé sur la troisième zone inclinée (25) implique deux points de contact entre l'agrafe (2) et la deuxième face (42) de l'élément support (4), un premier point de contact au niveau de la surface inclinée (45) et de la troisième zone inclinée (25), et un deuxième point de contact au niveau de la deuxième zone bombée (24) de la deuxième lame (22).

4. Véhiculé automobile, dans lequel la colonne de direction (101) est recouverte d'une coquille de protection (102), **caractérisé en ce qu'**au moins un ensemble de fixation (1) selon l'une des revendications précédentes est disposé entre la coquille (102) et un élément support (4) solidaire de la colonne de direction (101).

## Claims

1. Securing assembly (1) of the type comprising a securing clip (2) mounted on a support element (4), in which assembly the clip (2) is formed of a first blade (20) able to extend against a first face (41) of the support element (4), one end of this first blade (20) being extended substantially at right angles by an intermediate part (21) the free end of which is extended by a second blade (22), this second blade (22) being formed successively from the intermediate part (21), of an inclined first zone (23) directed towards the first blade (20), of a curved second zone (24) protruding towards the first blade (20), of an inclined third zone (25) extending the curved second zone (24) and inclining away from the first zone and from the first blade (20),
this second blade (22) being able to at least bear against a second face (42) of the support element (4) which is the opposite face to the first face (41), so that the support element (4) is gripped by the two blades (20, 22) of the clip (2),
**characterized in that** the second face (42) of the support element (4) has an inclined surface (45) which extends facing at least part of the inclined third zone (25) and against which this inclined third zone (25) of the second blade (22) comes to bear.

2. Securing assembly (1) according to Claim 1, **characterized in that** the angle and dimension of the inclined surface (45) of the support element (4) are such that a force applied to the inclined third zone (25) involves just one point of contact between the clip (2) and the support element (4), at the inclined surface (45) and the inclined third zone (25).

3. Securing assembly (1) according to Claim 1, **characterized in that** the angle and the dimension of the inclined surface (45) of the support element (4) are such that a force applied to the inclined third zone (25) involves two points of contact between the clip (2) and the second face (42) of the support element (4), a first point of contact at the inclined surface (45) and the inclined third zone (25), and a second point of contact at the curved second zone (24) of the second blade (22).

4. Motor vehicle in which the steering column (101) is covered with a protective shell (102), **characterized in that** at least one securing assembly (1) according to one of the preceding claims is fitted between the shell (102) and a support element (4) integral with the steering column (101).

## Patentansprüche

1. Befestigungseinheit (1) von der Art, die eine Befestigungsklammer (2) aufweist, die auf ein Trägerelement (4) montiert ist, wobei die Klammer (2) von einem ersten Flügel (20) geformt wird, der sich gegen eine erste Seite (41) des Trägerelements (4) erstrecken kann, wobei ein Ende dieses ersten Flügels (20) im Wesentlichen lotrecht von einem Zwischenbereich (21) verlängert wird, dessen freies Ende von einem zweiten Flügel (22) verlängert wird, wobei dieser zweite Flügel (22) nacheinander ausgehend von dem Zwischenbereich (21) von einer ersten geneigten Zone (23), die zum ersten Flügel (20) ausgerichtet ist, einer zweiten gewölbten Zone (24), die zum ersten Flügel (20) vorsteht, einer dritten geneigten Zone (25) geformt wird, die die zweite gewölbte Zone (24) verlängert und sich von der ersten Zone und vom ersten Flügel (20) entfernt, wobei dieser zweite Flügel (22) sich mindestens gegen eine zweite Seite (42) des Trägerelements (4) entgegengesetzt zur ersten Seite (41) anlegen kann, so dass das Trägerelement (4) von den zwei Flügeln (20, 22) der Klammer (2) eingespannt wird, **dadurch gekennzeichnet, dass** die zweite Seite (42) des Trägerelements (4) eine geneigte Fläche (45) aufweist, die sich vor mindestens einem Bereich der dritten geneigten Zone (25) erstreckt und auf der diese dritte geneigte Zone (25) des zweiten Flügels (22) aufliegt.

2. Befestigungseinheit (1) nach Anspruch 1, **dadurch gekennzeichnet, dass** der Winkel und die Abmessung der geneigten Fläche (45) des Trägerelements (4) derart sind, dass eine auf die dritte geneigte Zone (25) ausgeübte Kraft einen einzigen Kontaktpunkt zwischen der Klammer (2) und dem Trägerelement (4) im Bereich der geneigten Fläche (45) und der dritten geneigten Zone (25) impliziert.

3. Befestigungseinheit (1) nach Anspruch 1, **dadurch gekennzeichnet, dass** der Winkel und die Abmessung der geneigten Fläche (45) des Trägerelements (4) so sind, dass eine auf die dritte geneigte Zone (25) ausgeübte Kraft zwei Kontaktpunkte zwischen der Klammer (2) und der zweiten Seite (42) des Trägerelements (4), einen ersten Kontaktpunkt im Bereich der geneigten Fläche (45) und der dritten geneigten Zone (25) und einen zweiten Kontaktpunkt im Bereich der zweiten gewölbten Zone (24) des zweiten Flügels (22), impliziert.

4. Kraftfahrzeug, bei dem die Lenksäule (101) von einer Schutzschale (102) bedeckt ist, **dadurch gekennzeichnet, dass** mindestens eine Befestigungseinheit (1) nach einem der vorhergehenden Ansprüche zwischen der Schale (102) und einem fest mit der Lenksäule (101) verbundenen Trägerelement (4) angeordnet ist.
